(19) Europäisches Patentamt
European Patent Office
Office européen des brevets

(11) Veröffentlichungsnummer : **0 061 032**
**B1**

(12) # EUROPÄISCHE PATENTSCHRIFT

(45) Veröffentlichungstag der Patentschrift : **21.03.84**

(21) Anmeldenummer : **82101653.2**

(22) Anmeldetag : **04.03.82**

(51) Int. Cl.[3] : **A 01 N 57/12** // (A01N57/12, 53/00, 47/22)

(54) **Schädlingsbekämpfungsmittel, ihre Herstellung und Verwendung.**

(30) Priorität : **12.03.81 DE 3109476**

(43) Veröffentlichungstag der Anmeldung : **29.09.82 Patentblatt 82/39**

(45) Bekanntmachung des Hinweises auf die Patenterteilung : **21.03.84 Patentblatt 84/12**

(84) Benannte Vertragsstaaten : **AT BE CH DE FR GB IT LI NL SE**

(56) Entgegenhaltungen : **DE-A- 2 658 074**

(73) Patentinhaber : **BAYER AG**
**Konzernverwaltung RP Patentabteilung**
**D-5090 Leverkusen 1 Bayerwerk (DE)**

(72) Erfinder : **Behrenz, Wolfgang, Dr.**
**Untergründemich 14**
**D-5063 Overath (DE)**
Erfinder : **Schütte, Manfred, Dr.**
**Theuspfad 76**
**D-5024 Pulheim 4 (DE)**
Erfinder : **Naumann, Klaus, Dr.**
**Richard-Wagner-Strasse 9**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 061 032 B1

Schädlingsbekämpfungsmittel, ihre Herstellung und Verwendung

Die vorliegende Erfindung betrifft neue synergistische Mischungen aus den bekannten Wirkstoffen [(Pentafluorphenyl)-methyl]-(−)-1R, 3S-3-(2,2-dichlorethenyl)-2,2-dimethylcyclopropancarboxylat und 0,0-Dimethyl-0-2,2-dichlorvinylphosphat (Dichlorvos) und gegegebenenfalls von 0-Isopropoxyphenyl-N-methylcarbamat (Propoxur), diese Wirkstoffkombinationen enthaltende Formulierungen (Mittel), deren Herstellung und Verwendung zur Bekämpfung von Arthropoden.

Es ist bereits bekannt, daß Propoxur und Dichlorvos eine gute Wirkung gegen Insekten und Spinnentiere besitzen. Diese Wirkstoffe werden daher seit vielen Jahren mit großem Erfolg zur Schädlingsbekämpfung insbesondere zur Bekämpfung von Hausungeziefer eingesetzt. Durch aufkommende Resistenz erleiden sie jedoch, wie bisher alle in der praktischen Anwendung befindlichen Insektizide im Laufe der Zeit gewisse Wirkungseinbußen, die in bestimmten Fällen ihre Einsatzfähigkeit einschränken können. Die Folge davon ist, daß zur Bekämpfung resistenter Schädlinge die benötigten Anwendungskonzentrationen und Aufwandmengen immer weiter erhöht werden müssen, um noch eine befriedigende Wirkung zu erzielen, bis schließlich die Grenze erreicht ist, an der der Einsatz vor allem aus ökonomischen und anwendungstechnischen Gründen nicht mehr sinnvoll oder möglich ist. Besonders problematisch wird die Ausbildung resistenter Insektenpopulationen dadurch, daß sich ihre Resistenz nicht nur gegen ein bestimmtes Insektizid richtet, sondern in der Regel alle Wirkstoffe aus der gleichen Wirkstoffklasse oder sogar aus mehreren in der Wirkung ähnlichen Wirkstoffklassen mit erfaßt werden.

Der Lösung der Aufgabe, geeignete Mittel zur Bekämpfung resistenter Schädlinge zu entwickeln, kommt daher eine besonders große Bedeutung zu.

Es wurde nun gefunden, daß Mischungen aus den bekannten Wirkstoffen

I. [(Pentafluorphenyl)-methyl]-(−)-1R, 3S-3-(2,2-dichlorethenyl)-2,2-dimethylcyclopropancarboxylat der Formel I

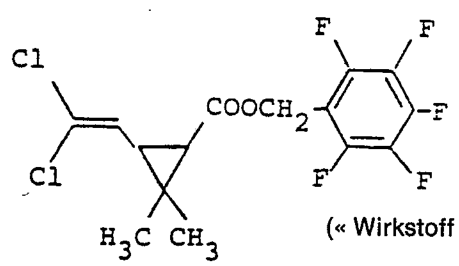

(I)

(« Wirkstoff I »)

II. 0,0-Dimethyl-0-(2,2-dichlorvinyl)-phosphat (common name ; Dichlorvos) der Formel II

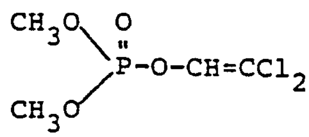

(II)

(« Wirkstoff II »)

und gegebenenfalls

III. 2-Isopropoxy-phenyl-N-methylcarbamat (common name : Propoxur) der Formel III

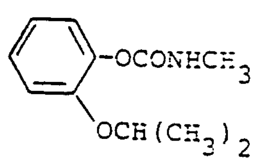

(III)

(« Wirkstoff III »)

eine besonders hohe Wirkung gegen Arthropoden, insbesondere gegen Insekten und Spinnentiere aufweisen.

Die Wirkstoffe II und III sind Wirkstoffe bekannter Handelsprodukte und der Wirkstoff I ist aus der Deutschen Offenlegungsschrift 2 658 074 bekannt.

Überraschenderweise ist die Wirksamkeit der erfindungsgemäßen Wirkstoffkombination aus den beiden Wirksroffen I und II oder den drei Wirkstoffen I, II und III wesentlich höher als die Summe der Wirksamkeit der Einzelverbindungen. Es liegt also bei den erfindungsgemäßen Kombinationen ein echter synergistischer Effekt vor.

Gegenstand der vorliegenden Erfindungen sind somit Mischungen aus den beiden Wirkstoffen I und II beziehungsweise aus den drei Wirkstoffen I, II und III, diese Mischungen enthaltende Formulierungen (Schädlingsbekämpfungsmittel), ihre Herstellung und Verwendung zur Bekämpfung von Arthropoden, insbesondere von Insekten und Spinnentieren, ganz besonders bevorzugt von Insekten.

Die Mengenverhältnisse der Wirkstoffe untereinander können in den erfindungsgemäßen Wirkstoffmischungen bzw. Schädlingsbekämpfungsmitteln in relativ großen Bereichen schwanken. Die Mengenverhältnisse (Gewichtsteile) der zwei Komponenten I und II liegen bevorzugt zwischen 1 : 100 und 1 : 1, insbesondere zwischen 1 : 100 und 1 : 10 und die der drei Komponenten I, II und III zwischen 1 : 100 : 100 und 1 : 1 : 1, insbesondere zwischen 1 : 50 : 50 und 1 : 10 : 10. Dabei kan auch das Mengenverhältnis der Komponenten II und III zueinander in dem angegebenen Rahmen variieren. Diese Mengenverhältnisse müssen selbstverständlich nicht ganzen Zahlen entsprechen.

Besonders bevorzugt sind Wirkstoffgemische bzw. Schädlingsbekämpfungsmittel, in welchen die Mengenverhältnisse (Gewichtsteile) der Wirkstoffe I und II bei etwa 1 : 10, etwa 1 : 25 oder etwa 1 : 50 und die der Wirkstoffe I, II und III bei etwa 1 : 10 : 25, etwa 1 : 25 : 25, etwa 1 : 25 : 50 oder etwa 1 : 50 : 100 liegen.

Die erfindungsgemäßen Schädlingsbekämpfungsmittel besitzen eine ausgezeichnete knock-down-Wirkung und Mortalität auf die verschiedensten schädlichen Insekten und Spinnentiere, insbesondere Insekten.

Dabei kommt der schnellen knock-down-Wirkung besonders bei der Bekämpfung von Hausungeziefer eine große Bedeutung zu, da der Anwender auf eine schnelle Beseitigung der Belästigung, vor allem aus hygienischen Gründen, einen besonderen Wert legt. Die neuen Schädlingsbekämpfungsmittel sind gegenüber den gegen Carbamate, Phosphor (phosphon) säureester und Pyrethroide resistenten Schädlingen viel wirksamer und können daher in weit geringeren Mengen bzw. Konzentrationen und mit besserem Erfolg eingesetzt werden als Schädlingsbekämpfungsmittel, die nur [(Pentafluorphenyl)-methyl]-(−)-1R, 3S-3-(2,2-dichlorethenyl)-2,2-dimethylcyclopropancarboxylat oder Dichlorvos oder Propoxur enthalten.

Zu den oben erwähnten Schädlingen gehören beispielsweise folgende Schädlinge :

Aus der Ordnung der Thysanura z. B. Lepisma saccharina.

Aus der Ordnung der Orthoptera z. B. Blatta orientalis, Periplaneta americana, Leucophaea maderae, Blattella germanica, Aceta domesticus.

Aus der Ordnung der Dermaptera z. B. Forficula auricularia.

Aus der Ordnung der Isoptera z. B. Reticulitermes spp.

Aus der Ordnung der Heteroptera z. B. Cimex lectularius, Rhodnius prolixus, Triatoma spp.

Aus der Ordnung der Lepidoptera z. B. Ephestia Kuehniella und Galleria mellonella.

Aus der Ordnung der Coleoptera z. B. Anobium punctatum, Rhizopertha dominica, Bruchidius obtectus, Acanthoscelides obtectus, Hylotrupes bajulus, Oryzaephilus surinamensis, Sitophilus spp., Dermestes spp., Trogoderma spp., Anthrenus spp., Attagenus spp., Lyctus spp., Ptinus spp., Niptus hololeucus, Gibbium psylloides, Tribolium spp., Tenebrio molitor.

Aus der Ordnung der Hymenoptera z. B. Lasius spp., Monomorium pharaonis, Vespa spp.

Aus der Ordnung der Diptera z. B. Aëdes spp., Anopheles spp., Culex spp., Drosophila melanogaster, Musca spp., Fannia spp., Calliphora erythrocephala, Lucilia spp., Chrysomyia spp., Stomoxys spp., Tabanus spp.

Aus der Ordnung der Siphonaptera z. B. Xenopsylla cheopis, Ceratophyllus spp.

Aus der Ordnung der Arachnida z. B. Scorpio maurus, Latrodectus mactans.

Aus der Ordnung der Acarina z. B. Acarus siro, Argas spp., Ornithodoros spp., Dermanyssus gallinae, Boophilus spp., Rhipicephalus spp., Amblyomma spp., Hyalomma spp., Ixodes spp.

Die Wirkstoffkombinationen können in die üblichen Formulierungen übergeführt werden, wie in Lösungen, Emulsionen, Spritzpulver, Suspensionen, Pulver, Stäubemittel, Pasten, lösliche Pulver, Aerosole, Suspensions-Emulsionskonzentrate, Wirkstoff-imprägnierte Natur- und synthetische Stoffe, Feinstverkapselungen in polymeren Stoffen, ferner in Formulierungen mit Brennsätzen, wie Räucherpatronen, -dosen, -spiralen u. ä. sowie ULV-Kalt- und Heißnebel-Formulierungen.

Diese Formulierungen werden in bekannter Weise hergestellt, z. B. durch Vermischen der Wirkstoffe mit Streckmitteln und Formulierhilfsmitteln, also flüssigen Lösungsmitteln, unter Druck stehenden verflüssigten Gasen und/oder festen Trägerstoffen, gegebenenfalls unter Verwendung von oberflächenaktiven Mitteln also Emulgiermitteln und/oder Dispergiermitteln.

Im Falle der Benutzung von Wasser als Streckmittel können z. B. auch organische Lösungsmittel als Hilfslösungsmittel verwendet werden. Als flüssige Lösungsmittel kommen im wesentlichen infrage : Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Ethylenglycol sowie deren Äther und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgase, wie Halogenkohlenwasserstoffe sowie Butan, Propan, ferner Stickstoff, Distickstoffoxid und Kohlendioxid; als feste Trägerstoffe: natürliche Gesteinsmehle, wie Kaoline, Tonerde, Talkum, Kreide, Quarz, Attapulgit, Montmorillonit oder Diatomeenerde und synthetische Gesteinsmehle, wie hochdisperse Kieselsäure, Aluminiumoxid und Silikate; als Emulgiermittel: nichtionogene und anionische Emulgatoren, wie Polyoxyethylen-Fettsäure-Ester, Polyoxy-ethylen-Fettalkohol-Äther, Alkylaryl-Polyglykol-äther, Alkylsulfonate, Alkylsulfate, Alkyl-Arylsulfonate sowie Eiweißhydrolysate; als Dispergiermittel: z. B. Lignin, Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat.

Zur Verwendung in Ködern können die Formulierungen die üblichen Lock- und Köderstoffe, z. B. Pheromone, attraktive Farbstoffe, Kohlehydrate und Eiweiße enthalten.

Besonders bevorzugte Formulierungen sind Aerosole, Ölsprühmittel und Emulsionskonzentrate.

Die Formulierungen enthalten im allgemeinen zwischen 0,5 und 100 Gew.-% der Wirkstoffkombinationen, vorzugsweise zwischen 0,5 und 60 %.

Die Anwendung der erfindungsgemäßen Wirkstoffkombinationen erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsform kann von 0,01 bis zu 100 Gew.-% Wirkstoffe, vorzugsweise zwischen 0,1 und 10 Gew.-% liegen.

Die Anwendung geschieht in einer den Anwendungsformen angepaßten üblichen Weise.

Aufgrund ihrer besonderen Eigenschaften können die erfindungsgemäßen Wirkstoffgemische bzw. ihre Formulierungen in einem breiten Bereich zur Bekämpfung von Arthropoden, insbesondere von Insekten eingesetzt werden. Bevorzugte Einsatzgebiete sind die gewerbliche und private Hygiene (z. B. Schulen, Krankenhäuser, nahrungsmittelverarbeitende Betriebe und Haushalte), der gewerbliche und private Vorratsschutz (z. B. Nahrungsmitteläger) sowie der Einsatz in der Landwirtschaft und Tierhaltung (z. B. Stallfliegenbekämpfung).

Die Herstellung der erfindungsgemäßen Schädlingsbekämpfungsmittel soll anhand der folgenden Beispiele erläutert werden.

## Formulierungsbeispiele

| 1) Sprayformulierung | Gewichtsteile |
|---|---|
| Wirkstoff I | 0,01 |
| Wirkstoff II | 1,0 |
| Methylenchlorid | 5,0 |
| Desodoriertes Kerosen/Gemisch gesättigter, aliphatischer Kohlenwasserstoffe | 10,0 |
| Parfümöl | 0,01 |
| Treibmittel: Propan/Butan (15 : 85) | 83,98 |

| 2) Sprayformulierung | Gewichtsteile |
|---|---|
| Wirkstoff I | 0,04 |
| Wirkstoff II | 1,0 |
| Methylenchlorid | 5,0 |
| Desodoriertes Kerosen | 10,0 |
| Parfümöl | 0,01 |
| Treibmittel: Propan/Butan (15 : 85) | 83,95 |

| 3) Sprayformulierung | Gewichtsteile |
|---|---|
| Wirkstoff I | 0,04 |
| Wirkstoff II | 1,0 |
| Wirkstoff III | 2,0 |
| Methylenchlorid | 25,0 |
| Desodoriertes Kerosen | 12,43 |
| Parfümöl | 0,03 |
| Treibmittel: Propan/Butan (15 : 85) | 59,50 |

| 4) Ölsprühmittelformulierung | Gewichtsteile |
|---|---|
| Wirkstoff I | 0,08 |
| Wirkstoff II | 0,5 |
| Isopropanol | 10,0 |
| Petroleum | 89,42 |

| 5) Ölsprühmittelformulierung | Gewichtsteile |
|---|---|
| Wirkstoff I | 0,02 |
| Wirkstoff II | 1,0 |
| Isopropanol | 10,0 |
| Petroleum | 88,98 |

| 6) Ölsprühmittelformulierung | Gewichtsteile |
|---|---|
| Wirkstoff I | 0,04 |
| Wirkstoff II | 1,0 |
| Wirkstoff III | 1,0 |
| Isopropanol | 10,0 |
| Petroleum | 87,96 |

Die Wirksamkeit der erfindungsgemäßen Wirkstoffkombinationen soll anhand der folgenden Beispiele erläutert werden :

## Biologische Beispiele

Sprühdosen oder Ölsprühmittel, die entweder nur Wirkstoff I oder Wirkstoff II oder Wirkstoff III enthalten, werden ebenso wie Sprühdosen oder Ölsprühmittel, die Wirkstoff I und II oder die Wirkstoffe I, II und III in Kombinationen enthalten, in Räumen von 30 $m^3$ Inhalt versprüht. Zuvor wurden in den Räumen 3 Drahtkäfige mit je 20 gegen Carbamate, Phosphor (phosphon) säureester und Pyrethroide stark resistente Musca domestica (♂♂, Stamm Hans) aufgehängt. Nach der Ausbringung (durch Sprühen) von jeweils 17 g der Formulierungen pro Raum, wurden die Räume geschlossen und bis zu einer Stunde die Wirkung auf die Fliegen fortlaufend kontrolliert. Getestet wurde nach wieviel Minuten 50 % (ergibt : K.D. 50-Werte) bzw. 95 % (ergibt : K.D. 95-Werte) der Versuchstiere in Rückenlage (known down) gefallen sind. Die ermittelten Zahlen enthält die nachfolgende Tabelle :

Tabelle Versuchsfliegen :

Musca domestica (Stamm Hans, ∞, multiresistent)

| Wirkstoffe | % (Gewicht) Wirkstoffe in der Formulierung | knock down-Wirkung in Minuten nach Ausbringung K.D. 50 | K.D. 95 |
|---|---|---|---|
| I | 0,01 bis 0,08 | keine | keine |
| II | 0,5<br>1,0 | keine<br>30 | keine<br>55 |
| III | 2,0 | keine | keine |
| I + II | 0,01 + 1,0 | 28 | 44 |
| I + II | 0,02 + 1,0 | 21 | 39 |

(Siehe Fortsetzung Seite 6 f.)

(Fortsetzung)

| Wirkstoffe | % (Gewicht) Wirkstoffe in der Formulierung | knock down-Wirkung in Minuten nach Ausbringung K.D. 50 | K.D. 95 |
|---|---|---|---|
| I + II | 0,04 + 1,0 | 18 | 34 |
| I + II | 0,03 + 0,5 | 23 | 51 |
| I + II | 0,08 + 0,5 | 20 | 40 |
| I + II + III | 0,02 + 1,0 + 2,0 | 18 | 33 |
| I + II + III | 0,03 + 1,0 + 2,0 | 16 | 26 |
| I + II + III | 0,04 + 1,0 + 2,0 | 14 | 21 |

« keine » bedeutet, daß innerhalb 1 Stunde eine K.D. 50 oder K.D. 95 nicht erreicht wurde.

**Ansprüche**

1. Wirkstoffmischungen bestehend aus
I) [(Pentafluorphenyl)-methyl]-(−)-1R, 3S-3-(2,2-dichlorethenyl)-2,2-dimethylcyclopropancarboxylat (« Wirkstoff I ») und
II) 0,0-Dimethyl-0-(2,2-dichlorvinyl)phosphat (« Wirkstoff II ») und gegebenenfalls
III) 2-Isopropoxy-phenyl-N-methylcarbamat (« Wirkstoff III »).

2. Wirkstoffmischungen gemäß Anspruch 1, in welchen die Mengenverhältnisse (Gewichtsteile) der Wirkstoffe I und II zwischen 1 : 100 und 1 : 1 liegen.

3. Wirkstoffmischungen gemäß Anspruch 1, in welchen die Mengenverhältnisse (Gewichtsteile) der Wirkstoffe I und II zwischen 1 : 100 und 1 : 10 liegen.

4. Wirkstoffmischungen gemäß Anspruch 1, in welchen die Mengenverhältnisse (Gewichtsteile) der Wirkstoffe I, II und III zwischen 1 : 100 : 100 und 1 : 1 : 1 liegen.

5. Wirkstoffmischungen gemäß Anspruch 1, in welchen die Mengenverhältnisse (Gewichtsteile) der Wirkstoffe I, II und III zwischen 1 : 100 : 100 und 1 : 10 : 10 liegen.

6. Wirkstoffmischungen gemäß Anspruch 1, in welchen die Mengenverhältnisse (Gewichtsteile) der Wirkstoffe I und II bei etwa 1 : 10, etwa 1 : 25 oder etwa 1 : 50 liegen.

7. Wirkstoffmischungen gemäß Anspruch 1, in welchen die Mengenverhältnisse (Gewichtsteile) der Wirkstoffe I, II und III bei etwa 1 : 10 : 25, etwa 1 : 25 : 25, etwa 1 : 25 : 50 oder etwa 1 : 50 : 100 liegen.

8. Verwendung von Wirkstoffmischungen gemäß den Ansprüchen 1 bis 7 zur Bekämpfung von Arthropoden.

9. Schädlingsbekämpfungsmittel, gekennzeichnet durch den Gehalt an einer Wirkstoffmischung gemäß den Ansprüchen 1 bis 7.

**Claims**

1. Active compound mixtures comprising

I) 1R-(−)-[(pentafluorophenyl)-methyl]-3S-3-(2,2-dichloroethenyl)-2,2-dimethylcyclopropanecarboxylate (« active compound I ») and

II) 0,0-dimethyl 0-(2,2-dichlorovinyl) phosphate (« active compound II ») and, if appropriate,

III) 2-isopropoxy-phenyl N-methylcarbamate (« active compound III »).

2. Active compound mixtures according to Claim 1, wherein the proportions (parts by weight) of the active compounds I and II are between 1 : 100 and 1 : 1.

3. Active compound mixtures according to Claim 1, wherein the proportions (parts by weight) of the active compounds I and II are between 1 : 100 and 1 : 10.

4. Active compound mixtures according to Claim 1, wherein the proportions (parts by weight) of the active compounds I, II and III are between 1 : 100 : 100 and 1 : 1 : 1.

5. Active compound mixtures according to Claim 1, wherein the proportions (parts by weight) of the active compounds I, II and III are between 1 : 100 : 100 and 1 : 10 : 10.

6. Active compound mixtures according to Claim 1, wherein the proportions (parts by weight) of the active compounds I and II are about 1 : 10, about 1 : 25 or about 1 : 50.

7. Active compound mixtures according to Claim 1, wherein the proportions (parts by weight) of the active compounds I, II and III are about 1 : 10 : 25, about 1 : 25 : 25, about 1 : 25 : 50 or about 1 : 50 : 100.

8. Use of active compound mixtures according to Claims 1 to 7 for combating arthropods.

9. Pest-combating agents characterised in that they contain an active compound mixture according to Claims 1 to 7.

**Revendications**

1. Mélanges de substances actives constitués par

I) le (−)-1R,3S-3-(2,2-dichloréthényl)-2,2-diméthylcyclopropanecarboxylate de [(pentafluorophényl)-méthyle] (« substance active I ») et

II) le phosphate de 0,0-diméthyle et de 0-(2,2-dichlorovinyle) (« substance active II ») et, le cas échéant

III) le N-méthylcarbamate de 2-isopropoxyphényle (« substance active III »).

2. Mélanges de substances actives suivant la revendication 1, dans lesquels les rapports des quantités (parties en poids) des substances actives I et II se situent entre 1 : 100 et 1 : 1.

3. Mélanges de substances actives suivant la revendication 1, dans lesquels les rapports des quantités (parties en poids) des substances actives I et II se situent entre 1 : 100 et 1 : 10.

4. Mélanges de substances actives suivant la revendication 1, dans lesquels les proportions des quantités (parties en poids) des substances actives I, II et III se situent entre 1 : 100 : 100 et 1 : 1 : 1.

5. Mélanges de substances actives suivant la revendication 1, dans lesquels les proportions des quantités (parties en poids) des substances actives I, II et III se situent entre 1 : 100 : 100 et 1 : 10 : 10.

6. Mélanges de substances actives suivant la revendication 1, dans lesquels les rapports des quantités (parties en poids) des substances actives I et II ont des valeurs d'environ 1 : 10, d'environ 1 : 25 ou d'environ 1 : 50.

7. Mélanges de substances actives suivant la revendication 1, dans lesquels les proportions des quantités (parties en poids) des substances actives I, II et III ont des valeurs d'environ 1 : 10 : 25, d'environ 1 : 25 : 25, d'environ 1 : 25 : 50 ou d'environ 1 : 50 : 100.

8. Utilisation de mélanges de substances actives suivant les revendications 1 à 7 pour combattre des arthropodes.

9. Compositions pesticides, caractérisées par une teneur en un mélange de substances actives suivant les revendications 1 à 7.